# DEMANDE DE BREVET EUROPEEN

(11) **EP 2 200 415 A1**
(43) Date de publication de la demande: **23.06.2010**
(21) Numéro de dépôt: 09179924.7
(22) Date de dépôt: 18.12.2009
(51) Int. Cl.: H05K 5/00

(54) **Coffret comportant un corps et un capot pour renfermer un appareil électrique**

(30) Priorité: 22.12.2008 FR 0858980
(71) Demandeur: Legrand France, 87000 Limoges (FR); Legrand SNC, 87000 Limoges (FR)
(72) Inventeur: Texier, Jean-Luc, 87240, AMBAZAC (FR); Voriot, Benoît, 87350, PANAZOL (FR)
(74) Mandataire: Lepelletier-Beaufond, François

(57) **Abrégé**

II s'agit d'un coffret comportant un corps et un capot pour fermer le corps, avec une cheminée mâle (40) et une cheminée femelle (41) dont l'une appartient au corps et l'autre appartient au capot, et avec la cheminée mâle (40) qui présente en bout un tenon (42) et la cheminée femelle (41) qui présente en bout une mortaise (43) adaptée à recevoir à emboîtement le tenon (42) de la cheminée mâle (40). La cheminée femelle (41) comporte au moins deux dents (55) saillant axialement au-delà du débouché (56) de ladite mortaise (43) et présentant chacune du côté interne une rampe de guidage (57) vers ladite mortaise (43).

## Description

### DOMAINE DE L'INVENTION

L'invention a trait aux coffrets comportant un corps et un capot pour fermer le corps, en particulier les coffrets prévus pour renfermer des appareils électriques.

### ARRIERE PLAN TECHNOLOGIQUE

On connaît déjà de tels coffrets dans lesquels le corps et le capot sont en appui l'un contre l'autre par leurs tranches respectives, ces tranches présentant une complémentarité de forme afin de procurer un positionnement mutuel, voire une étanchéité, entre le corps et le capot.

Il existe ainsi des coffrets dont la tranche du corps présente une nervure saillant d'un rebord et dont la tranche du capot présente une rainure en renfoncement par rapport à un rebord. A l'état assemblé, les rebords du corps et du capot sont en appui l'un contre l'autre avec la rainure du capot qui reçoit la nervure du corps.

Le verrouillage du capot sur le corps s'effectue grâce à des vis coopérant chacune avec un couple de deux cheminées appartenant respectivement au corps et au capot, les extrémités de ces deux cheminées étant alignés lorsque le capot est en place sur le corps, de sorte que la tige de la vis de verrouillage peut passer de l'alésage de l'une des cheminées à celui de l'autre cheminée pour s'y mettre en prise.

Afin d'assurer le bon alignement des cheminées de chaque couple, l'une des cheminées présente en bout un tenon et l'autre cheminée présente en bout une mortaise adaptée à recevoir à emboîtement le tenon.

### OBJET DE L'INVENTION

L'invention vise à améliorer la commodité de mise en place du capot sur le corps d'un tel coffret.

Elle propose à cet effet un coffret comportant un corps et un capot pour fermer le corps, avec une cheminée mâle et une cheminée femelle dont l'une appartient au corps et l'autre appartient au capot, et avec la cheminée mâle qui présente en bout un tenon et la cheminée femelle qui présente en bout une mortaise adaptée à recevoir à emboîtement le tenon de la cheminée mâle ; **caractérisé en ce que** la cheminée femelle comporte au moins deux dents saillant axialement au-delà du débouché de ladite mortaise et présentant chacune du côté interne une rampe de guidage vers ladite mortaise.

Les rampes de guidage des dents forment une sorte de prolongement de la surface latérale délimitant la mortaise, de sorte que la plage de décalage pouvant exister entre la cheminée mâle et la cheminée femelle lorsqu'elles viennent en regard l'une de l'autre sans qu'il en résulte une absence d'emboîtement du tenon dans la mortaise, est considérablement agrandie.

Les risques de défaut d'alignement entre les deux cheminées, qui nécessiterait de recommencer l'opération de mise en place du capot sur le corps du coffret, sont ainsi éliminés ou en tout cas extrêmement réduits.

La mise en oeuvre des dents munies de rampes est particulièrement simple, commode et économique, la quantité de matière nécessaire étant particulièrement faible devant la quantité de matière qui aurait été nécessaire pour prolonger d'autant la mortaise.

Selon des caractéristiques préférées, chaque dite dent est formée par un prolongement d'une nervure orientée axialement et saillant radialement de la surface latérale externe d'un fût dans lequel est ménagée ladite mortaise.

La disposition des dents dans le prolongement des nervures est particulièrement avantageuse parce qu'elle permet tout à la fois d'offrir aux dents une bonne assise mécanique et de permettre la réalisation de la cheminée femelle sans difficulté particulière de moulage.

Selon des caractéristiques préférées pour des raisons de simplicité, de commodité et d'économie :
- chaque dite dent saille de la tranche d'extrémité d'un fût dans lequel est ménagé ladite mortaise, ledit débouché de ladite mortaise étant bordé par ladite tranche d'extrémité ;
- la rampe de chaque dite dent se raccorde à la surface latérale de ladite mortaise ;
- la rampe de chaque dite dent est plus inclinée vers l'extérieur que la surface latérale de ladite mortaise ;
- lesdites dents sont au nombre de trois, équi-réparties angulairement ;
- ledit tenon et ladite mortaise sont tronconiques ,
- ladite cheminée mâle et ladite cheminée femelle comportent chacune un alésage pour coopérer avec une vis de verrouillage ;
- ladite cheminée mâle appartient audit corps et ladite cheminée femelle appartient audit capot ;
- ledit coffret comporte quatre coins chacun muni d'un couple formé par une dite cheminée mâle et par une dite cheminée femelle ;
- le corps et le capot comportent, pour leur positionnement mutuel, au moins deux pattes saillant dudit capot ; et/ou
- le corps et le capot comportent, pour leur positionnement mutuel, une complémentarité de forme entre une tranche du corps et une tranche du capot venant en appui l'une sur l'autre lorsque ledit capot est en place sur ledit corps.

### BREVE DESCRIPTION DES DESSINS

L'exposé de l'invention sera maintenant poursuivi par la description détaillée d'un exemple de réalisation, donnée ci-après à titre illustratif et non limitatif, en référence aux dessins annexés, sur lesquels :
- la figure 1 est une vue en perspective, particulièrement schématique, du corps d'un coffret selon l'invention ;
- la figure 2 est une vue en coupe du coffret selon l'invention, suivant le plan repéré par II-II sur la figure 1, dans une position où le capot est légèrement à l'écart du corps ;
- la figure 3 est une vue en perspective-coupe du corps et du capot en cours de mise en place sur le corps, cette vue montrant le coin du corps que l'on voit en haut à droite sur la figure 1 ;
- la figure 4 est un agrandissement de la portion de la figure 2 représentant l'extrémité de la cheminée du corps et l'extrémité de la cheminée du capot que l'on y voit à droite ;
- la figure 5 est une vue en perspective de l'extrémité de cette cheminée du capot ;
- la figure 6 est la vue en coupe repérée par VI-VI sur la figure 4 ; et
- la figure 7 est une vue similaire à la figure 6, mais avec les deux cheminées en appui l'une contre l'autre.

### DESCRIPTION DETAILLEE D'UN EXEMPLE DE REALISATION

Le coffret 10 illustré sur les dessins est prévu pour renfermer des appareils électriques.

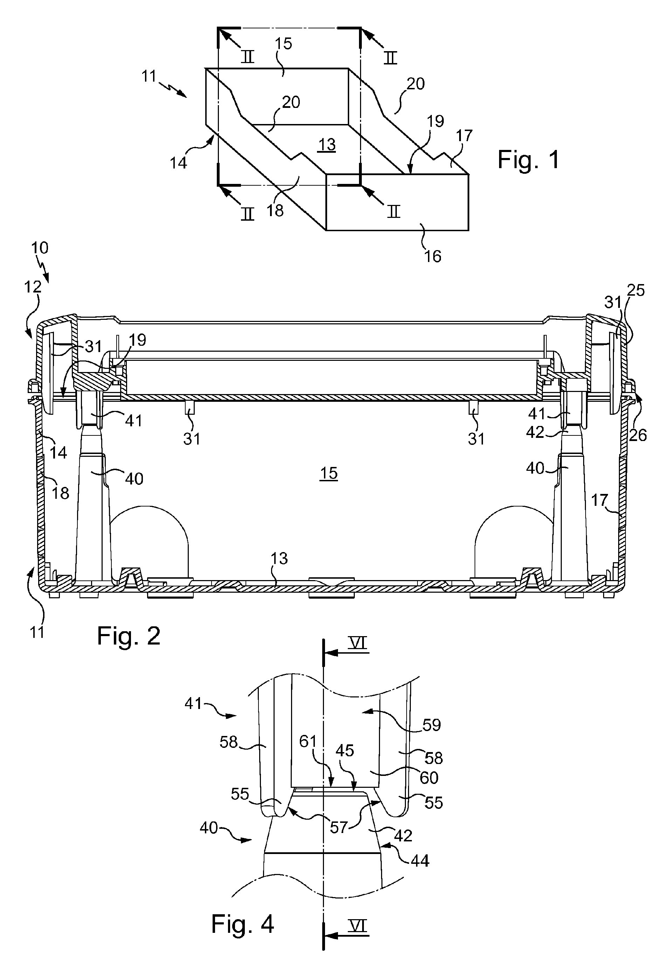

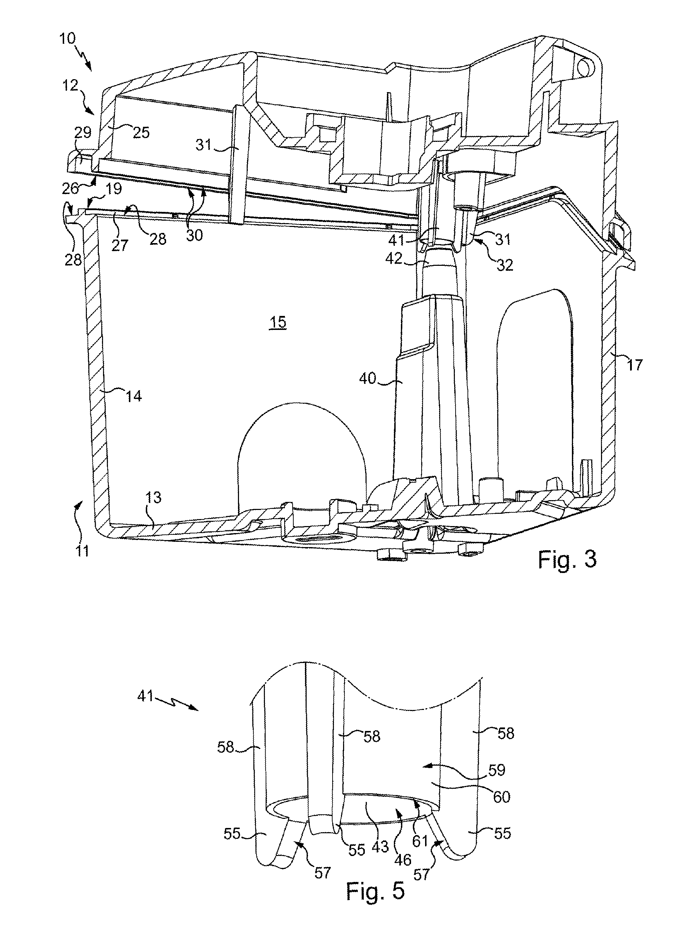

Il comporte un corps 11, représenté de façon très schématique sur la figure 1 et de façon détaillée sur les figures 2 et 3 ; et un capot 12, montré sur les figures 2 et 3 en cours de mise en place sur le corps 11, pour fermer celui-ci.

Le coffret 10, une fois le corps 11 et le capot 12 assemblés, est globalement parallélépipédique.

Ainsi qu'on le voit sur la figure 1, le corps 11 comporte une paroi de fond 13 globalement rectangulaire et une paroi latérale 14 qui prend racine sur le pourtour de la paroi de fond 13.

La paroi latérale 14 présente deux faces opposées 15 et 16 qui longent les petits côtés de la paroi 13 et deux faces opposées 17 et 18 qui longent les grands côtés de la paroi de fond 13.

Le corps 11 est prévu pour être fixé sur un support tel qu'un mur vertical avec la paroi de fond 13 qui est contre ou en regard de ce support, les faces 15 et 16 qui sont horizontales et les faces 17 et 18 qui sont verticales.

La largeur de la paroi latérale 14, c'est-à-dire la distance séparant sa tranche 19 de la paroi de fond 13, est constante sur les faces 15 et 16 ainsi que sur les portions des faces 17 et 18 situées à proximité des faces 15 et 16.

Chacune des faces 17 et 18 présente une échancrure 20 globalement en forme de trapèze isocèle dont la grande base est située au même niveau que le reste de la tranche 19.

Ainsi, la petite base de l'échancrure 20 forme une portion de la tranche 19 qui est plus proche de la paroi de fond 13. Les côtés inclinés de l'échancrure 20 relient cette portion plus proche au reste de la tranche 19.

L'échancrure 20 permet un accès plus facile à l'intérieur du corps 11 lorsque le capot 12 est enlevé.

Ainsi qu'on le voit sur les figures 2 et 3, le capot 12 présente une paroi latérale 25 dont la tranche 26 présente une forme complémentaire à la forme de la tranche 19 de la paroi latérale 14 du corps 11.

Ici, comme on le voit plus particulièrement sur la figure 3, la tranche 19 présente une nervure 27 saillant d'un rebord 28 tandis que la tranche 26 présente une rainure 29 en renfoncement par rapport à un rebord 30. Lorsque le capot 12 est en place sur le corps 11, la nervure 27 est engagée dans la rainure 29 et les rebords 28 et 30 sont en appui l'un contre l'autre.

Lors de la mise en place du capot 12 sur le corps 11, leur positionnement mutuel est facilité par la présence, sur le capot 12, de pattes de positionnement 31 présentant une extrémité saillante venant porter contre la surface interne de la paroi latérale 14 du corps 11.

Ici, chacune des quatre faces de la paroi latérale 25 du capot 12 est munie de deux pattes 31 ; et chaque patte 31 a une section en T dont la tranche de base prend racine, sur une certaine longueur, sur la paroi latérale 25 alors que, sur la portion de chaque patte 31 qui saille de la paroi latérale, cette tranche de base forme une rampe 32 (figure 3) inclinée vers l'intérieur du coffret 10 et vers l'extrémité distale de la patte 31.

Le verrouillage du capot 12 sur le corps 11 s'effectue grâce à des vis (non représentées) coopérant chacune avec un couple de deux cheminées emboîtables 40 et 41 appartenant respectivement au corps 11 et au capot 12.

Il est prévu un tel couple à chacun des quatre coins du coffret 10.

On va maintenant décrire le couple se trouvant dans le coin que l'on voit en haut à droite sur la figure 1, étant entendu que les trois autres couples sont identiques.

Ici, pour leur emboîtement, la cheminée 40 du corps 11 joue le rôle d'une cheminée mâle et la cheminée 41 du capot 12 joue le rôle d'une cheminée femelle : la cheminée 40 présente en bout un tenon 42 et la cheminée 41 présente en bout une mortaise 43 (figures 5 à 7) adaptée à recevoir à emboîtement le tenon 42.

Le tenon 42 présente une surface latérale 44 qui est tronconique et une surface d'extrémité 45 qui est plate. De même, la mortaise 43 présente une surface latérale 46 qui est tronconique et une surface de fond 47 qui est plate.

La surface d'extrémité 45 du tenon 42 et la surface de fond 47 de la mortaise 43 ont un diamètre semblable tandis que la surface latérale 44 du tenon 42 et la surface latérale 46 de la mortaise 43 ont une inclinaison semblable.

Plus précisément, pour permettre un emboîtement, et d'ailleurs un désemboîtement, aisés, le diamètre de la surface d'extrémité 45 est légèrement plus petit que le diamètre de la surface de fond 47 tandis que l'angle au sommet de la surface latérale 44 est légèrement plus petit que l'angle au sommet de la surface latérale 46.

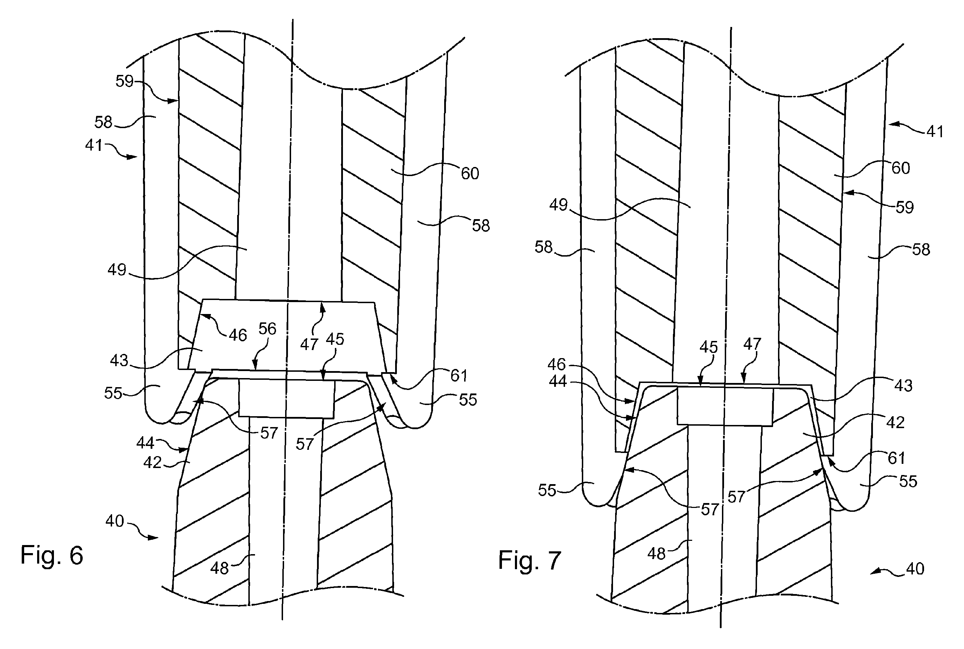

Lorsque le capot 12 est en place sur le corps 11, le tenon 42 est engagé dans la mortaise 43, ainsi que montré sur la figure 7.

L'alésage 48 de la cheminée 40 se trouve alors dans le prolongement de l'alésage 49 de la cheminée 41.

Cela permet à la tige de la vis de verrouillage de passer aisément de l'alésage 49 à l'alésage 48.

Alors que la tige de la vis de verrouillage peut coulisser et tourner librement dans l'alésage 49, le serrage de cette vis met sa tige en prise avec le pourtour de l'alésage 48 de sorte qu'en fin de serrage les cheminées 40 et 41 s'appliquent fortement l'une contre l'autre, la surface d'extrémité 45 du tenon 42 venant alors en butée contre la surface de fond 47 de la mortaise 43.

En outre de son rôle de verrouillage entre le capot 12 et le corps 11, le couple de cheminées 40 et 41 sert, de même que les pattes 31 et la complémentarité de forme des tranches 19 et 26, à positionner mutuellement le capot 12 et le corps 11.

Pour faciliter ce positionnement mutuel, la cheminée 41 est munie de dents 55 qui saillent axialement au-delà du débouché 56 (figure 6) de la mortaise 43, chacune des dents 55 présentant du côté interne une rampe 57 de guidage vers la mortaise 43.

Ici, les dents 55 sont au nombre de trois, équi-réparties angulairement (elles sont à 120° les unes des autres) ; et elles sont formées par un prolongement d'une nervure 58 orientée axialement et saillant radialement de la surface latérale externe 59 du fût 60 dans lequel sont ménagés l'alésage 49 et la mortaise 43.

Comme on le voit plus particulièrement sur la figure 5, chacune des dents 55, en outre de se trouver dans le prolongement d'une nervure 58, saille de la tranche d'extrémité 61 du fût 60, laquelle tranche borde le débouché 56 de la mortaise 43.

La rampe 57 de chaque dent 55 se raccorde à la surface latérale 46 de la mortaise 43.

Chaque rampe 57 s'incline, à partir du débouché 56, vers l'extérieur et vers l'extrémité de la dent 55, laquelle extrémité est arrondie.

Les rampes 57 sont légèrement plus inclinées vers l'extérieur que la surface latérale 46, de sorte que quand le tenon 42 est engagé dans la mortaise 43 ainsi que montré sur la figure 7, l'appui de la cheminée 41 sur la surface latérale 44 de la mortaise 42 s'effectue par les rampes 57.

Lors du serrage de la vis de verrouillage, les rampes 57 et la surface latérale 44 se déforment légèrement pour permettre la venue en butée des surfaces 45 et 47.

On observera que les rampes 57 forment une sorte de prolongement de la surface latérale 46 de la mortaise 43 ; et que la mise en oeuvre des rampes 57 avec les dents 55 ne nécessite qu'une quantité de matière particulièrement faible devant la quantité de matière qui aurait été nécessaire pour prolonger d'autant la mortaise 43 puisqu'il aurait fallu augmenter non seulement la longueur du fût 60 mais également son épaisseur.

On observera encore que la disposition des dents 55 dans le prolongement des nervures 58 permet tout à la fois d'offrir aux dents 55 une bonne assise mécanique et de permettre la réalisation de la cheminée 41 sans difficulté particulière de moulage.

Dans une variante non représentée, le tenon 42 et la mortaise 43 sont remplacés par un tenon et une mortaise ayant une forme autre que tronconique, par exemple en tronc de pyramide.

Dans une autre variante non représentée, le nombre de dents tel que 55 est de deux ou supérieur à trois.

Dans une autre variante non représentée, la cheminée mâle telle que 40 appartient à un capot tel que 25 tandis que la cheminée femelle telle que 41 appartient à un corps tel que 11.

Dans une autre variante non représentée, le nombre de couple de cheminées est différent de quatre, par exemple un seul couple ou deux couples diagonalement opposés.

Dans une autre variante non représentée, les moyens de positionnement mutuels entre le corps tel que 11 et le capot tel que 12 sont différents des pattes telles que 31 et/ou de la complémentarité de forme entre les tranches telles que 19 et 26.

De nombreuses autres variantes sont possibles en fonction des circonstances, et l'on rappelle à cet égard que l'invention ne se limite pas aux exemples décrits et représentés.

## Revendications

1. Coffret comportant un corps (11) et un capot (12) pour fermer le corps (11), avec une cheminée mâle (40) et une cheminée femelle (41) dont l'une appartient au corps (11) et l'autre appartient au capot (12), et avec la cheminée mâle (40) qui présente en bout un tenon (42) et la cheminée femelle (41) qui présente en bout une mortaise (43) adaptée à recevoir à emboîtement le tenon (42) de la cheminée mâle (40) ; **caractérisé en ce que** la cheminée femelle (41) comporte au moins deux dents (55) saillant axialement au-delà du débouché (56) de ladite mortaise (43) et présentant chacune du côté interne une rampe de guidage (57) vers ladite mortaise (43).

2. Coffret selon la revendication 1, **caractérisé en ce que** chaque dite dent (55) est formée par un prolongement d'une nervure (58) orientée axialement et saillant radialement de la surface latérale externe (59) d'un fût (60) dans lequel est ménagée ladite mortaise (43).

3. Coffret selon l'une quelconque des revendications 1 ou 2, **caractérisé en ce que** chaque dite dent (55) saille de la tranche d'extrémité (61) d'un fût (60) dans lequel est ménagé ladite mortaise (43), ledit débouché de ladite mortaise étant bordé par ladite tranche d'extrémité.

4. Coffret selon la revendication 3, **caractérisé en ce que** la rampe (57) de chaque dite dent (55) se raccorde à la surface latérale (46) de ladite mortaise (43).

5. Coffret selon l'une quelconque des revendications 1 à 4, **caractérisé en ce que** la rampe (57) de chaque dite dent (55) est plus inclinée vers l'extérieur que la surface latérale (46) de ladite mortaise (43).

6. Coffret selon l'une quelconque des revendications 1 à 5, **caractérisé en ce que** lesdites dents (55) sont au nombre de trois, équi-réparties angulairement.

7. Coffret selon l'une quelconque des revendications 1 à 6, **caractérisé en ce que** ledit tenon (42) et ladite mortaise (43) sont tronconiques.

8. Coffret selon l'une quelconque des revendications 1 à 7, **caractérisé en ce que** ladite cheminée mâle (40) et ladite cheminée femelle (41) comportent chacune un alésage (48, 49) pour coopérer avec une vis de verrouillage.

9. Coffret selon l'une quelconque des revendications 1 à 8, **caractérisé en ce que** ladite cheminée mâle (40) appartient audit corps et ladite cheminée femelle (41) appartient audit capot (42).

10. Coffret selon l'une quelconque des revendications 1 à 9, **caractérisé en ce qu'**il comporte quatre coins chacun muni d'un couple formé par une dite cheminée mâle (40) et par une dite cheminée femelle (41).

11. Coffret selon l'une quelconque des revendications 1 à 10, **caractérisé en ce que** le corps (11) et le capot (12) comportent, pour leur positionnement mutuel, au moins deux pattes (31) saillant dudit capot (12).

12. Coffret selon l'une quelconque des revendications 1 à 11, **caractérisé en ce que** le corps (11) et le capot (12) comportent, pour leur positionnement mutuel, une complémentarité de forme entre une tranche du corps (11) et une tranche du capot (12) venant en appui l'une sur l'autre lorsque ledit capot (12) est en place sur ledit corps (11).
